(19) Europäisches Patentamt
European Patent Office
Office européen des brevets

(11) EP 4 802 878 A1

(12) **EUROPEAN PATENT APPLICATION**
published in accordance with Art. 153(4) EPC

(43) Date of publication:
**09.09.2026 Bulletin 2026/37**

(21) Application number: **24912216.9**

(22) Date of filing: **02.12.2024**

(51) International Patent Classification (IPC):
*A01G 7/00* *(2006.01)*

(52) Cooperative Patent Classification (CPC):
**A01G 7/00; A01G 17/00; G06T 7/50; G06V 20/68**

(86) International application number:
**PCT/JP2024/042563**

(87) International publication number:
**WO 2025/142326 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2023 JP 2023221961**

(71) Applicant: **OMRON Corporation**
**Kyoto-shi, Kyoto 600-8530 (JP)**

(72) Inventors:
- **TAKAO, Azusa**
  **Kyoto-shi, Kyoto 600-8530 (JP)**
- **WANG, Ying**
  **Kyoto-shi, Kyoto 600-8530 (JP)**

(74) Representative: **Isarpatent**
**Patent- und Rechtsanwälte Part G mbB**
**Friedrichstrasse 31**
**80801 München (DE)**

# (54) INFORMATION PROCESSING DEVICE, INFORMATION PROCESSING METHOD, AND PROGRAM

(57) To measure the sizes of fruits with high accuracy. An information processing device includes: an acquisition unit configured to acquire a two dimensional image of a fruit of a plant captured by an imaging unit configured to capture an image of the fruit, and distance information indicating a distance between the fruit and the imaging unit; an extraction unit configured to extract an outline of the fruit in the two dimensional image; a computing unit configured to fit two ellipses along different portions of the outline of the fruit, and compute sizes and positions of two spheres based on the distance information and the two ellipses; and an estimation unit configured to estimate a three dimensional shape of the fruit so as to be along at least a part of a surface of each of the two spheres based on the sizes and positions of the two spheres.

FIG.3

START
S1
ACQUIRE TWO DIMENSIONAL IMAGE
S2
OUTPUT TWO DIMENSIONAL IMAGE TO WHICH CIRCUMSCRIBED QUADRANGLE IS ADDED
S3
IS ENTIRE PORTION OF FRUIT VISIBLE?
NO
YES
S5
OUTPUT CLIPPED IMAGE OF FRUIT (PARTIAL)
S6
ESTIMATE OUTLINE OF FRUIT
S7
OUTPUT CLIPPED IMAGE TO WHICH OUTLINE OF FRUIT IS ADDED
S4
OUTPUT CLIPPED IMAGE OF FRUIT (ENTIRE PORTION)
S8
ESTIMATE THREE DIMENSIONAL SHAPES OF FRUITS
S9
OUTPUT VOLUME OF FRUITS
END

EP 4 802 878 A1

## Description

TECHNICAL FIELD

The present invention relates to an information processing device, an information processing method, and a program.

BACKGROUND OF INVENTION

Patent Literature 1 describes an estimation system that estimates fruit information including at least one item of positions, the number, and presence or absence of plant fruits by using an input image including a plant. Patent Literature 2 describes a method for assessing a fruit setting state of a plant stock.

CITATION LIST

PATENT LITERATURE

Patent Literature 1: JP 2022-94331 A
Patent Literature 2: JP 2022-144240 A

SUMMARY

TECHNICAL PROBLEM

For example, in agricultural sites, particularly in large-scale farms, there is a demand for higher accuracy in the measurement of the sizes of fruits. Although the sizes of fruits can be measured with high accuracy by performing three dimensional imaging, the measurement of the size of fruits takes a longer time. Thus, it is required to measure the sizes of fruits with high accuracy based on two dimensional images of the fruits.

The present invention has been made in view of the circumstances described above, and an object thereof is to provide a technique that can measure the sizes of fruits with high accuracy.

SOLUTION TO PROBLEM

An information processing device according to an aspect of the present invention includes: an acquisition unit configured to acquire a two dimensional image of a fruit of a plant captured by an imaging unit configured to capture an image of the fruit, and distance information indicating a distance between the fruit and the imaging unit; an extraction unit configured to extract an outline of the fruit in the two dimensional image; a computing unit configured to fit two ellipses along different portions of the outline of the fruit, and compute sizes and positions of two spheres based on the distance information and the two ellipses; and an estimation unit configured to estimate a three dimensional shape of the fruit so as to be along at least a part of a surface of each of the two spheres based on the sizes and positions of the two spheres. With the information processing device, it is possible to measure the sizes of fruits with high accuracy.

In the information processing device, the extraction unit is configured to extract a feature portion from the two dimensional image of the fruit, and the computing unit is configured to fit the two ellipses such that one of the different portions of the outline of the fruit is closer to the feature portion than another of the different portions of the outline of the fruit. In the information processing device, the feature portion is a portion of the fruit opposite to a portion connected to a body of the plant in the two dimensional image, and is a portion visually different from another portion of the plant in the two dimensional image. In the information processing device, the feature portion is a fruit apex, a fruit base, a calyx, or a blossom scar. In the information processing device, the extraction unit is configured to extract a feature portion from the two dimensional image of the fruit, and the computing unit is configured to, with one of the two spheres being a first sphere and another of the two spheres being a second sphere, compute, based on the distance information, a size and a position of the first sphere having an ellipse as an image on an imaging plane, the ellipse being fitted such that one of the different portions of the outline of the fruit is closer to the feature portion than the other of the different portions of the outline of the fruit, and compute a position of the second sphere having another of the two ellipses as an image on the imaging plane, a size of the second sphere being identical to a size of the first sphere. In the information processing device, the computing unit is configured to calculate a first cone circumscribing one of the two ellipses, calculate the first sphere inscribed in the first cone, calculate a second cone circumscribing another of the two ellipses, and calculate the second sphere inscribed in the

second cone. The information processing device further includes a calculation unit configured to calculate a volume of the fruit based on a distance obtained by adding a radius of the first sphere and a radius of the second sphere to a distance between a center of the first sphere and a center of the second sphere, and on a diameter of the first sphere or a diameter of the second sphere. The information processing device further includes an adding unit configured to, when a portion of the fruit in the two dimensional image is hidden, add an outline of the hidden portion of the fruit to the two dimensional image.

Note that the present invention can be regarded as an information processing method including at least some of the above-mentioned processing operations, a program for causing a computer to execute at least some of the above-mentioned processing operations, or a computer-readable recording medium on which such a program is recorded in a non-transitory manner. Each of the configurations and processing operations described above can be combined with one another to constitute the present invention, as long as no technical inconsistency arises.

ADVANTAGEOUS EFFECTS OF INVENTION

According to the present invention, it is possible to provide a technique capable of measuring the sizes of fruits with high accuracy.

BRIEF DESCRIPTION OF THE DRAWINGS

[FIG. 1] FIG. 1 is a diagram illustrating an overall configuration of a processing system.
[FIG. 2] FIG. 2 is a block diagram illustrating a configuration of an external device.
[FIG. 3] FIG. 3 is a flowchart for explaining the overall flow of the operation of the external device.
[FIG. 4] FIG. 4 is a diagram illustrating an example of a case where circumscribed quadrangles in a two dimensional image are created.
[FIG. 5] FIG. 5 is a diagram illustrating an example of a two dimensional image to which circumscribed quadrangles surrounding fruits are added.
[FIG. 6] FIG. 6 is a flowchart illustrating an example (first example) of processing in steps S3 to S5.
[FIG. 7] FIG. 7 is a diagram illustrating an example of a case where a circumscribed quadrangle is divided into four regions.
[FIG. 8] FIG. 8 is a diagram illustrating an example of a case where a circumscribed quadrangle is divided into four regions.
[FIG. 9] FIG. 9 is a flowchart illustrating an example (second example) of the processing in steps S3 to S5.
[FIG. 10] FIG. 10 is a flowchart illustrating an example (third example) of the processing in steps S3 to S5.
[FIG. 11] FIG. 11 is a flowchart illustrating an example of processing in steps S6 and S7.
[FIG. 12] FIG. 12 is a flowchart illustrating an example of processing in steps S8 and S9.
[FIG. 13] FIG. 13 is an explanatory diagram of a case where two ellipses are fitted to the outline of a fruit in a clipped image.
[FIG. 14] FIG. 14 is a diagram illustrating a camera coordinate system.
[FIG. 15] FIG. 15 is a diagram illustrating an example of calculation of the volume V of a fruit.
[FIG. 16] FIG. 16 is a flowchart illustrating an example of processing in steps S52 and S53.
[FIG. 17] FIGS. 17A, 17B, and 17C are explanatory diagrams for explaining the processing in steps S52 and S53.
[FIG. 18] FIG. 18 is a diagram illustrating an example of the structure of data used for yield prediction.

DESCRIPTION OF EMBODIMENTS

Hereinafter, an application example and an embodiment will be described with reference to the drawings. The application example and embodiment described below are merely one aspect of the present application and are not intended to limit the scope of rights of the present application.

<Application Examples>

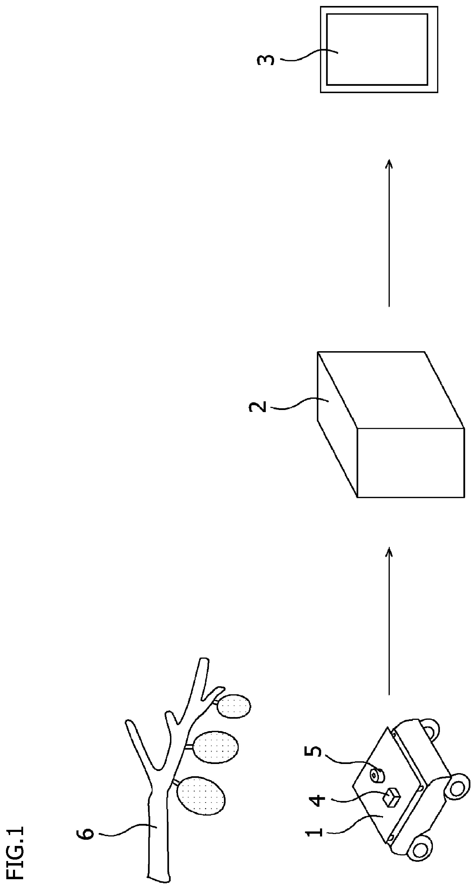

FIG. 1 is a diagram illustrating an overall configuration of a processing system to which the present invention is applied. The processing system according to the embodiment includes an autonomous traveling robot 1, an external device 2, and an external device 3. The autonomous traveling robot 1 is a device (self-propelled traveling device) having a function as a self-propelled unmanned traveling vehicle or a device (self-propelled transport device) having a function as a self-propelled unmanned transport vehicle. The external device 2 includes an information processing device such as a personal computer or a server computer. The external device 2 may be allocated on a cloud. The external device 2 may

include a plurality of information processing devices. For example, the external device 2 may be implemented by a plurality of information processing devices in different locations on a network working together. The external device 3 includes an information processing terminal such as a tablet terminal or a smartphone.

The autonomous traveling robot 1 includes a camera (imaging device) 4 and an illumination device 5. The autonomous traveling robot 1 patrols a farm or the like, and captures images of fruits of a plant 6 in the farm or the like using a camera 4. The plant 6 is kiwi, but the object to be captured by the camera 4 may be another plant, for example, persimmon, peach, tomato, pear, apple, melon, bottle gourd, Oriental Melon, or the like. Images (captured images) captured by the camera 4 are two dimensional images (two dimensional wide area images) captured from below or obliquely to fruits of the plant 6. The two dimensional images captured by the camera 4 are sent from the autonomous traveling robot 1 to the external device 2. The illumination device 5 is installed in the vicinity of the camera 4. For example, in night imaging, the plant 6 is captured while being constantly illuminated from below or obliquely. In daytime imaging, the plant 6 is captured typically without being illuminated, but the plant 6 may be illuminated in a period in which the plant 6 is covered with leaves to avoid a backlight state.

Data and information are transmitted and received between the autonomous traveling robot 1 and the external device 2. Data and information are transmitted and received between the external device 2 and the external device 3. The external device 2 acquires two dimensional images from the autonomous traveling robot 1, measures the sizes of fruits in the two dimensional images, predicts the yield, and transmits the sizes of the fruits, the yield, and the like to the external device 3. The external device 3 includes a display unit such as a display. The external device 3 displays the sizes of the fruits, the yield, and the like on the display unit. The autonomous traveling robot 1 and the external device 2 may be integrated. For example, the autonomous traveling robot 1 may have the functions of the external device 2. Alternatively, the fruits of the plant 6 may be imaged by a handheld camera or a fixed camera as an imaging unit, and two dimensional images captured by the handheld camera or the fixed camera may be transmitted to the external device 2.

<Embodiments>

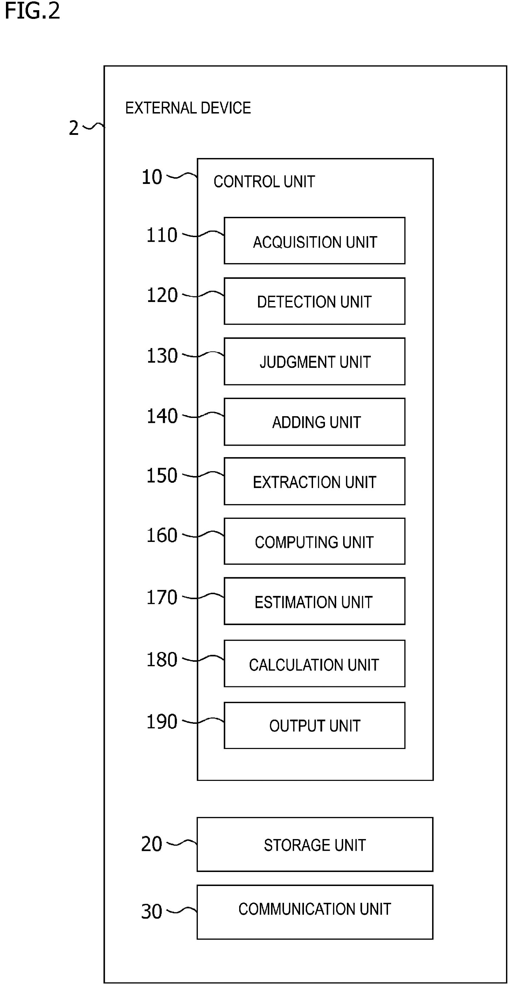

FIG. 2 is a block diagram illustrating a configuration of the external device 2. The external device 2 includes a control unit 10, a storage unit 20, and a communication unit 30. The control unit 10 controls operations of the external device 2. The control unit 10, which includes a central processing unit (CPU), a random access memory (RAM), a read only memory (ROM) and the like, controls each unit in the control unit 10 and performs various kinds of processing and the like. The storage unit 20 stores a program executed by the control unit 10, and various data used in processing executed by the control unit 10. For example, the storage unit 20 may be an auxiliary storage apparatus such as a hard disk drive (HDD) and a solid state drive (SSD). The storage unit 20 may be implemented by a detachable storage medium. The communication unit 30 is a communication interface that performs communication with the autonomous traveling robot 1 and the external device 3. The communication unit 30 includes at least one of a wired communication module or a wireless communication module.

The control unit 10 includes an acquisition unit 110, a detection unit 120, a judgment unit 130, an adding unit 140, an extraction unit 150, a computing unit 160, an estimation unit 170, a calculation unit 180, and an output unit 190. The acquisition unit 110 acquires a two dimensional image of a fruit of a plant captured by the camera 4 as the imaging unit and distance information indicating the distance between the fruit and the camera 4. The detection unit 120 detects a fruit in the two dimensional image. The judgment unit 130 determines whether a fruit is hidden in the two dimensional image. The adding unit 140 adds the outline of a hidden portion of a fruit to the two dimensional image. The extraction unit 150 extracts the outline of the fruit in the two dimensional image. The computing unit 160 fits two ellipses along different portions of the outline of the fruit, and determines the sizes and positions of two spheres based on the distance information and the two ellipses. The estimation unit 170 estimates the three dimensional shape of the fruit so as to be along at least a part of the surface of each of the two spheres based on the sizes and the positions of the two spheres. The calculation unit 180 calculates the size (diameter, length, volume, etc.) of the fruit based on the three dimensional shape of the fruit. The output unit 190 outputs the value calculated by the calculation unit 180, various types of information, and data. Not all components of the control unit 10 illustrated in FIG. 2 are essential, and components of the control unit 10 may be added or omitted as necessary. Furthermore, at least a portion of the functions of the control unit 10 may be implemented by a computer on the cloud.

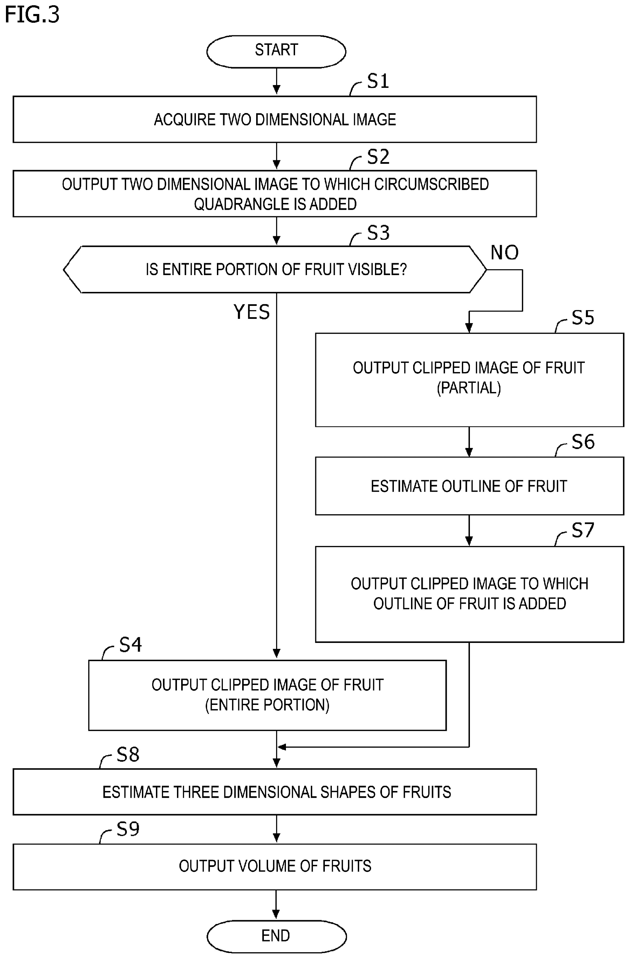

The overall flow of the operation of the external device 2 will be described with reference to FIG. 3. FIG. 3 is a flowchart for explaining the overall flow of the operation of the external device 2. In step S1, the control unit 10 acquires a two dimensional image (captured image of a fruit) from the autonomous traveling robot 1. In step S2, the control unit 10 detects a fruit in the two dimensional image using deep learning, and outputs a two dimensional image to which a circumscribed quadrangle (circumscribed rectangle) surrounding a visible portion of the fruit is added.

In step S3, the control unit 10 determines whether the entire portion of the fruit is visible for each fruit in the two dimensional image to which the circumscribed quadrangle is added. When the entire portion of the fruit is visible (step S3; YES), the processing proceeds to step S4. When the entire portion of the fruit is not visible and a portion of the fruit is hidden

(step S3; NO), the processing proceeds to step S5.

In step S4, the control unit 10 outputs a clipped image (two dimensional image) of the fruit (entire portion) in the two dimensional image. The term "fruit (entire portion)" means a fruit with its entire portion visible. In step S5, the control unit 10 outputs a clipped image of a fruit (partial) in the two dimensional image. The fruit (partial) is a fruit with a hidden portion. In step S6, the control unit 10 estimates the outline of the fruit in the clipped image of the fruit (partial). In step S7, the control unit 10 adds the outline of the fruit in the clipped image of the fruit (partial), and outputs the clipped image to which the outline of the fruit is added. In step S8, the control unit 10 estimates the three dimensional shapes of the fruits from the clipped image of the fruit (entire portion) and the clipped image to which the outline of the fruit is added. In step S9, the control unit 10 calculates the volume of the fruits based on the three dimensional shapes of the fruits, and outputs the volume of the fruits.

Details of the processing in step S2 will be described. The control unit 10 detects fruits in two dimensional images using a trained model of deep learning. The trained model of deep learning may be stored in the storage unit 20. To create the trained model of deep learning, a user such as an operator creates a quadrangular frame in a two dimensional image of a fruit captured by the camera 4 of the autonomous traveling robot 1 so as to be in contact with the outer shape of the fruit in the two dimensional image. The user may create a quadrangular frame in a two dimensional image captured by a handheld camera or a fixed camera so as to be in contact with the outer shape of the fruit in the two dimensional image.

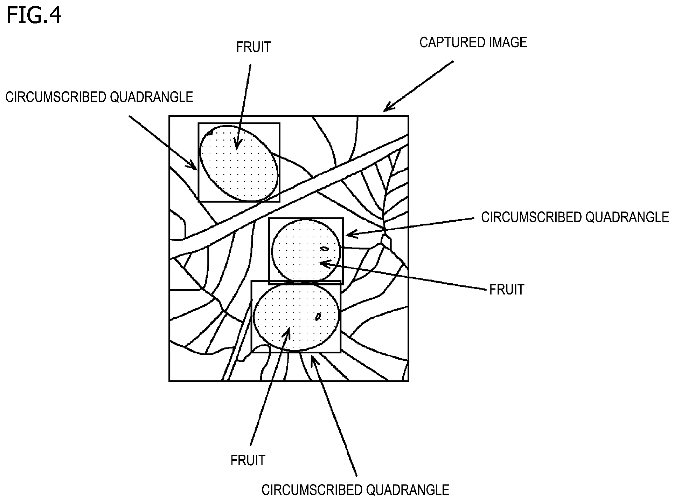

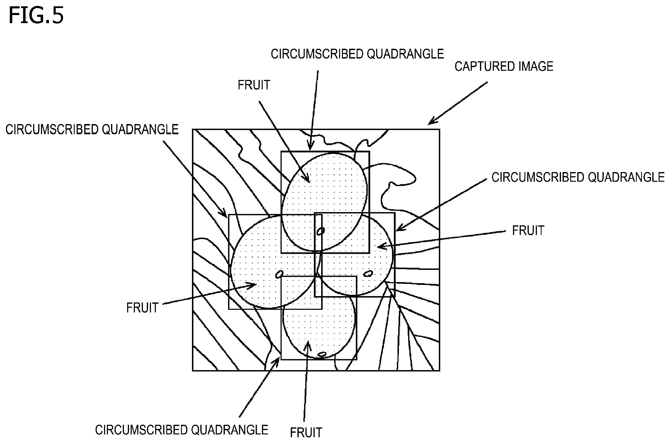

FIG. 4 is a diagram illustrating an example of a case where quadrangular frames (circumscribed quadrangles) are created so as to be in contact with the outer shapes of fruits in a two dimensional image. Since the accuracy of the quadrangular frames and how to perform deep learning affect the accuracy of detection of fruits, it is preferable to accurately create the quadrangular frames and perform deep learning many times. The two dimensional image in which the circumscribed quadrangles are created is stored in a database in the storage unit 20 and used as learning data. The learning data is used for creating a trained model of deep learning. The control unit 10 adds circumscribed quadrangles surrounding visible portions of fruits detected in the two dimensional image to the two dimensional image, and outputs the two dimensional image to which the circumscribed quadrangles are added. FIG. 5 is a diagram illustrating an example of a two dimensional image to which circumscribed quadrangles surrounding fruits are added. For example, when more than half of a fruit is visible, the fruit may be surrounded by a circumscribed quadrangle.

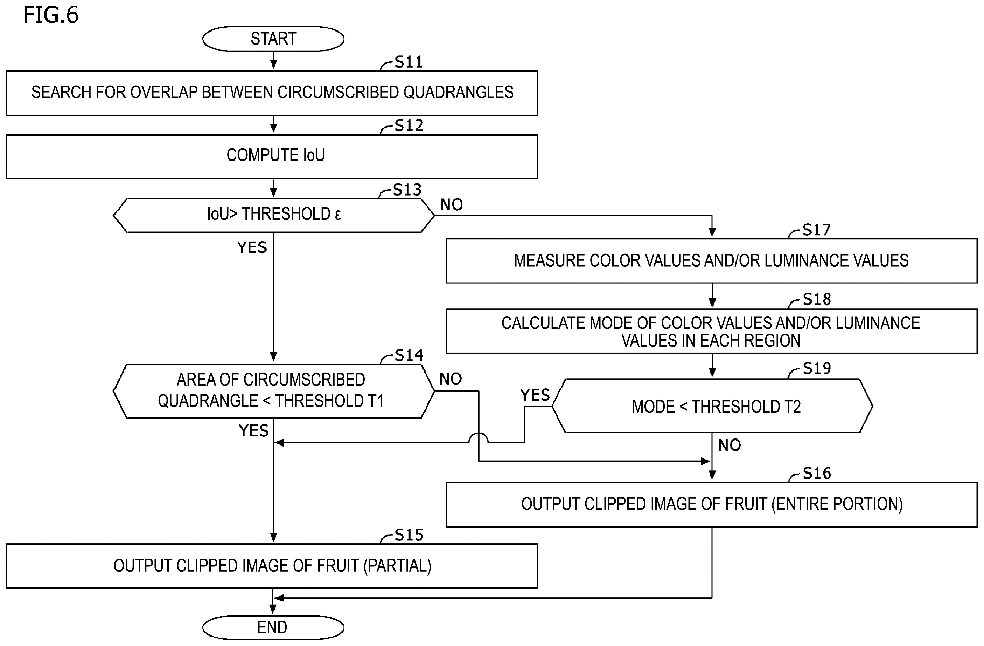

Details of the processing in steps S3 to S5 will be described. FIG. 6 is a flowchart illustrating an example (first example) of the processing in steps S3 to S5. In step S11, the control unit 10 searches for an overlap between circumscribed quadrangles in the two dimensional image. The purpose of searching for an overlap between circumscribed quadrangles in the two dimensional image is to determine the degree of overlap between fruits in the two dimensional image. When fruits in the two dimensional image do not overlap each other, circumscribed quadrangles in the two dimensional image do not overlap each other. On the other hand, when fruits in the two dimensional image overlap each other, circumscribed quadrangles in the two dimensional image likewise overlap each other.

In step S12, the control unit 10 computes an intersection over union (IoU). The IoU is an index representing the degree of overlap between circumscribed quadrangles in a two dimensional image, and is computed by, for example, Equation 1 below:

IoU = Area of the union of two circumscribed quadrangles/Area of the intersection of the two (Equation 1)

In step S13, the control unit 10 compares the IoU with a threshold $\varepsilon$ and determines whether the IoU is larger than the threshold $\varepsilon$. The threshold $\varepsilon$ may be obtained by an experiment. A value automatically computed by simulation, machine learning, or the like may be used as the threshold $\varepsilon$. As the threshold $\varepsilon$, the user may measure the sizes of fruits in the two dimensional image, and the median, the average, or the like of the sizes of fruits may be used. The threshold $\varepsilon$ is preferably set such that a small fruit or a fruit with a small visible portion is not omitted. When the IoU is larger than the threshold $\varepsilon$ (step S13; YES), the processing proceeds to step S14. When the IoU is equal to or smaller than the threshold $\varepsilon$ (step S13; NO), the processing proceeds to step S17.

In step S14, to examine whether a portion of a fruit in the two dimensional image is hidden by another fruit, the control unit 10 measures (computes) the area of the corresponding circumscribed quadrangle, and determines whether the area of the circumscribed quadrangle is smaller than a threshold T1. The threshold T1 may be obtained by simulation, machine learning, or the like. When the area of the circumscribed quadrangle is smaller than the threshold T1 (step S14; YES), the processing proceeds to step S15. When the area of the circumscribed quadrangle is equal to or larger than the threshold T1 (step S14; NO), the processing proceeds to step S16.

In step S15, the control unit 10 determines that a portion of a fruit in the two dimensional image is hidden, and outputs a clipped image of the fruit (partial). In step S16, the control unit 10 determines that the entire portion of the fruit in the two dimensional image is visible, and outputs a clipped image of the fruit (entire portion). In step S17, to detect an overlap between a fruit and an obstruction in the two dimensional image, the control unit 10 measures at least one of the RGB color values or the luminance values of all the pixels of the two dimensional image. The obstruction is a leaf, a trunk, a

stem, a branch, or the like other than fruits.

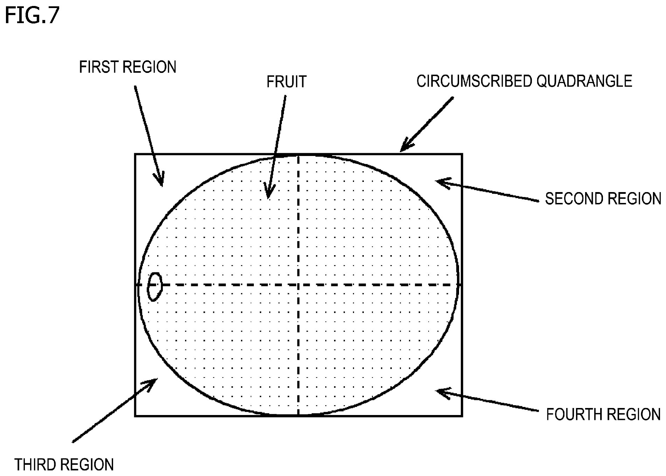

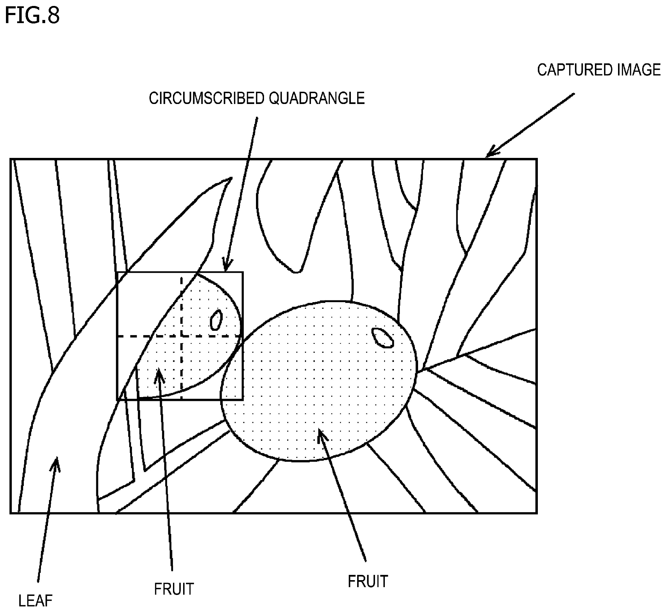

In step S18, the control unit 10 divides the circumscribed quadrangle into four regions, and calculates the mode of at least one of the RGB color values or the luminance values of all the pixels in each region. FIG. 7 is a diagram illustrating an example of a case where a circumscribed quadrangle is divided into four regions. In the example illustrated in FIG. 7, the circumscribed quadrangle is divided into first to fourth regions. FIG. 8 is a diagram illustrating an example of a case where a circumscribed quadrangle is divided into four regions. In the example illustrated in FIG. 8, the fruit and a leaf overlap each other in at least one of the four regions. Thus, the RGB color values (or luminance values) of all the pixels in one of the four regions are different from the RGB color values (or luminance values) of all the pixels in the remaining three of the four regions.

In step S19, the control unit 10 determines whether the mode of at least one of the RGB color values or the luminance values of all the pixels in each region is smaller than a threshold T2. The threshold T2 may be obtained by simulation, machine learning, or the like. Since the shape of a fruit is symmetrical, the modes of the RGB color values and the luminance values in each region after the circumscribed quadrangle is divided into four equal parts are the same for a fruit that is completely visible. Thus, the control unit 10 compares the mode of at least one of the RGB color values or the luminance values of all the pixels in each region with the threshold T2. When the mode of at least one of the RGB color values or the luminance values of all the pixels in each region is smaller than the threshold T2 (step S19; YES), the processing proceeds to step S15. When the mode of the RGB colors and/or the luminances of all the pixels in each region is equal to or larger than the threshold T2 (step S19; NO), the processing proceeds to step S16.

In the above description, features such as the RGB color values and the luminance values of the pixels are used, but other features, for example, a histogram of the RGB color values and the luminance values of the pixels may be used. In step S18, the control unit 10 may compute a histogram of at least one of the RGB color values or the luminance values of all the pixels in each region. In step S19, the control unit 10 may determine the degree of matching or similarity between the shape of the histogram of at least one of the RGB color values or the luminance values of all the pixels in each region and the shape of a predetermined histogram. The shape of the predetermined histogram may be obtained by simulation, machine learning, or the like. When the shape of the histogram of at least one of the RGB color values or the luminance values of all the pixels in each region does not match or is not similar to the shape of the predetermined histogram, the processing proceeds to step S15. When the shape of the histogram of at least one of the RGB color values or the luminance values of all the pixels in each region matches or is similar to the shape of the predetermined histogram, the processing proceeds to step S16.

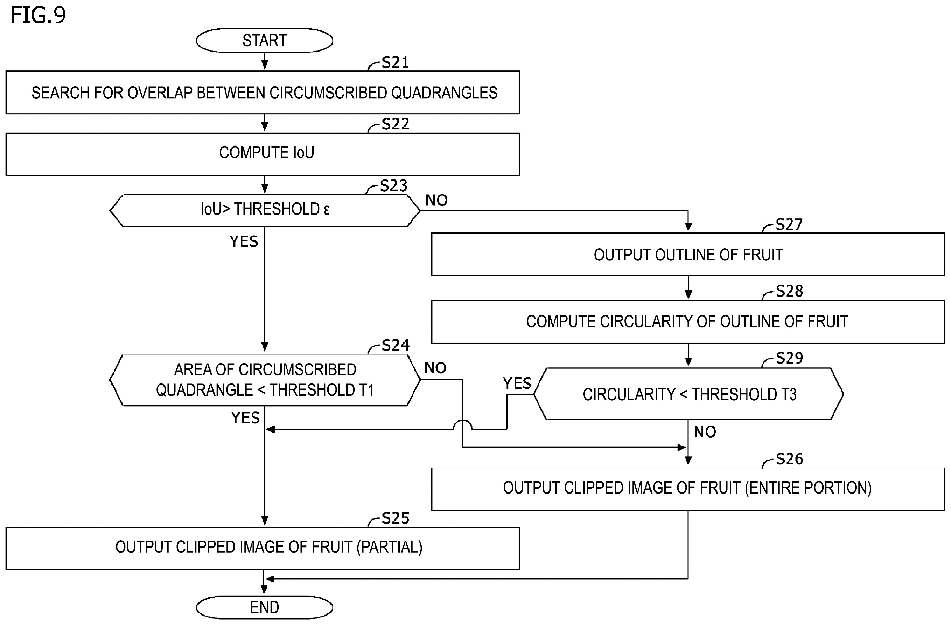

FIG. 9 is a flowchart illustrating an example (second example) of the processing in steps S3 to S5. Steps S21 to S26 are similar to steps S11 to 16, and thus detailed description thereof will be omitted. In step S27, to detect an overlap between a fruit and an obstruction in a two dimensional image, the control unit 10 extracts the outline of each fruit in the two dimensional image and outputs the outline of each fruit in the two dimensional image. The obstruction is a leaf, a trunk, a stem, a branch, or the like other than fruits.

In step S28, the control unit 10 computes the circularity of the outline of a fruit. Circularity is a metric used to quantitatively measure how closely a shape resembles a circle. The closer the circularity of the outline of the fruit is to 1.0, the closer the outline of the fruit is to a circle. The circularity is computed by, for example, Equation 2 below:

$$\text{Circularity} = 4 \times (\text{Area of a fruit})/\pi \times (\text{Long axis of the fruit})^{\wedge}2 \quad \text{(Equation 2)}$$

where $\pi$ is the number pi.

In step S29, the control unit 10 determines whether the circularity of the outline of the fruit is smaller than a threshold T3. The circularity of the outline of a fruit with a completely visible outline is large, whereas the circularity of the outline of an obstruction is small. Thus, when the fruit and the obstruction overlap each other, the circularity of the outline of the fruit becomes smaller. The threshold T3 is set to a value that makes the outlines of fruits distinguishable from those of obstructions, for example. The threshold T3 may be obtained by simulation, machine learning, or the like. When the circularity of the outline of the fruit is smaller than the threshold T3 (step S29; YES), the processing proceeds to step S25. When the circularity of the outline of the fruit is equal to or larger than the threshold T3 (step S29; NO), the processing proceeds to step S26.

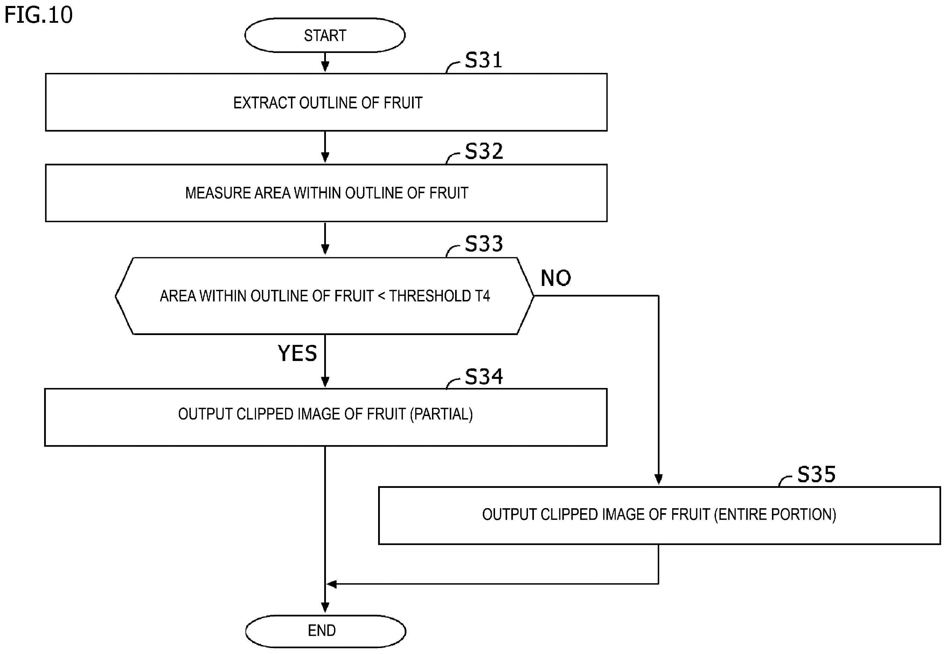

FIG. 10 is a flowchart illustrating an example (third example) of the processing in steps S3 to S5. In step S31, to detect an overlap between fruits in a two dimensional image, the control unit 10 extracts the outline of each fruit in the two dimensional image and outputs the outline of each fruit in the two dimensional image. In step S32, the control unit 10 measures the area within the outline of the fruit.

In step S33, the control unit 10 determines whether the area within the outline of the fruit is smaller than a threshold T4. The threshold T4 may be obtained by an experiment. A value automatically computed by simulation, machine learning, or the like may be used as the threshold T4. As the threshold T4, the user may measure the sizes of fruits

in the two dimensional image, and the median value, the average value, or the like of the sizes of fruits may be used. The threshold T4 is preferably set such that a small fruit or a fruit with a small visible portion is not omitted. For example, kiwi shelves have a small variation in the height direction, and kiwi fruits are captured from below the kiwi shelves. For this reason, fruits that are densely clustered in a two dimensional image are often on the same branch. From a biological perspective, the sizes of neighboring fruits are roughly the same, and if the area within the outline of a fruit is small, it can be said that a portion of the fruit is hidden and a visible portion of the fruit is small.

When the area within the outline of the fruit is smaller than the threshold T4 (step S33; YES), the processing proceeds to step S34. When the area within the outline of the fruit is equal to or larger than the threshold T4 (step S33; NO), the processing proceeds to step S35. In step S34, the control unit 10 determines that a portion of the fruit in the two dimensional image is hidden, and outputs a clipped image of the fruit (partial). In step S35, the control unit 10 determines that the entire portion of the fruit in the two dimensional image is visible, and outputs a clipped image of the fruit (entire portion).

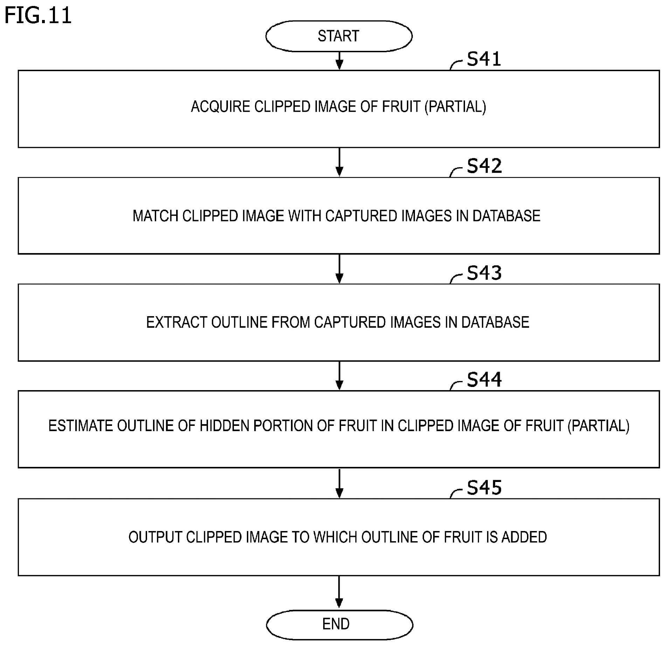

Details of the processing in steps S6 and S7 will be described. FIG. 11 is a flowchart illustrating an example of the processing in steps S6 and S7. In step S41, the control unit 10 acquires a clipped image of the fruit (partial). In step S42, the control unit 10 performs image analysis to match the clipped image with the two dimensional images in the database to obtain the outline of the fruit in the clipped image. The matching in the image analysis is processing of searching for a portion most similar to a template image from the input image. The control unit 10 may match the clipped image with the two dimensional images in the database by comparing the clipped image with the captured images in the database in a round-robin manner.

The database stores images of the entire portion of the fruit. The outline of a fruit is determined by the size of the fruit, the inclination of the fruit, and the relative position between the fruit and the camera 4. Thus, for example, images captured by changing the following Condition 1 to Condition 3 within assumed ranges may be prepared in advance in the database. The user may prepare images obtained by capturing a fruit and store the two dimensional images of the fruit in the database. The following Condition 1 to Condition 3 are examples, and the numerical values of the following Condition 1 to Condition 3 may be changed, or other conditions may be used.

Condition 1: The size of a fruit (three stages of small, medium, and large)
Condition 2: The inclination of the fruit (rotation of 360 degrees for each predetermined angle)
Condition 3: The relative position between the fruit and the camera 4 (two stages of a first predetermined distance range and a second predetermined distance range, First predetermined distance range < Second predetermined distance range)

In step S43, the control unit 10 extracts, from the two dimensional images in the database, an outline having the highest degree of matching between the outline of the fruit in the clipped image and the outlines of the fruits in the two dimensional images in the database. In step S44, the control unit 10 estimates the outline of the hidden portion of the fruit in the clipped image of the fruit (partial) based on the extracted outline. In step S45, the control unit 10 adds the outline of the hidden portion of the fruit to the clipped image of the fruit (partial), and outputs the clipped image to which the outline of the fruit is added. The control unit 10 may output the clipped image to which the outline of the fruit is added as a clipped image of the fruit (entire portion).

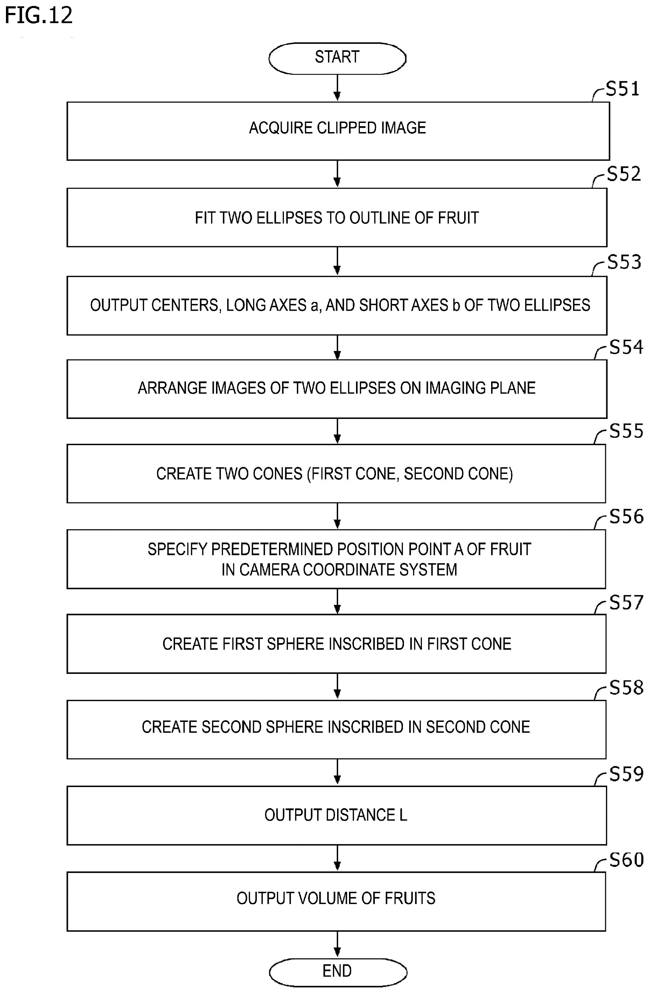

Details of the processing in steps S8 and S9 will be described. The processing of steps S8 and S9 is processing of modeling a fruit and estimating the three dimensional shape of the fruit to measure the size of the fruit. FIG. 12 is a flowchart illustrating an example of the processing in steps S8 and S9. In step S51, the control unit 10 acquires the clipped image (entire portion) and a clipped image to which the outline of the fruit is added. The control unit 10 may acquire one of the clipped image (entire portion) and the clipped image to which the outline of the fruit is added.

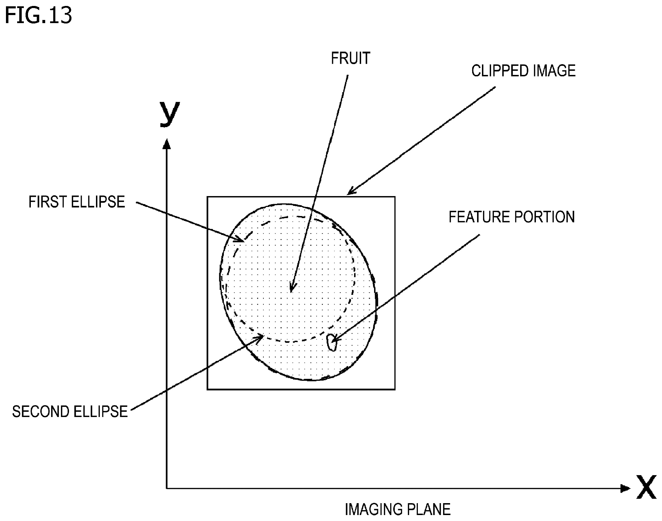

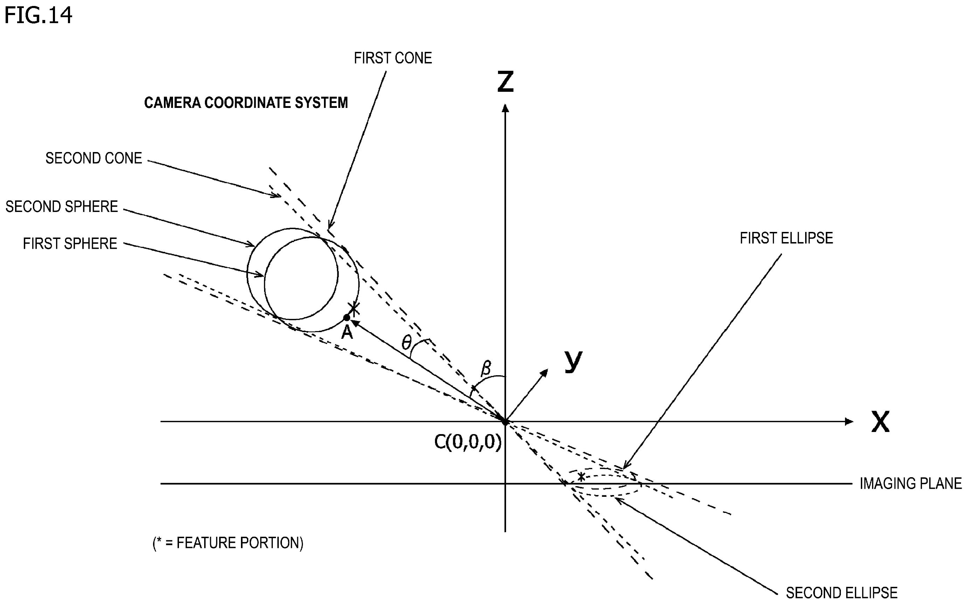

In step S52, the control unit 10 fits two ellipses to the outline of the fruit in the clipped image. Specifically, the control unit 10 fits two ellipses along different portions of the outline of the fruit in the clipped image. Fitting is to obtain a curve that best fits experimentally obtained data by approximation using a mathematical expression such as a polynomial. For example, the control unit 10 fits one ellipse so that a part of the outline of the fruit and a part of the one ellipse overlap each other, and fits the other ellipse so that another part of the outline of the fruit and a part of the other ellipse overlap each other. FIG. 13 is an explanatory diagram of a case where two ellipses (a first ellipse and a second ellipse) are fitted to the outline of a fruit in a clipped image. In the example illustrated in FIG. 13, the imaging plane is assumed to be on the xy plane. As illustrated in FIG. 13, images of two ellipses (the first ellipse and the second ellipse) are allocated on the imaging plane. The control unit 10 extracts a feature portion from the clipped image of the fruit. The fruit in the clipped image has a feature portion (feature point). The feature portion of the fruit is a portion of the fruit opposite to a portion connected to the body of the plant, and is a portion visually different from the other portions of the plant. The feature portion of the fruit is, for example, a fruit apex, a fruit base, a calyx, a blossom scar, or the like, but is not limited thereto. For example, kiwis, persimmons, peaches, and tomatoes have fruit apexes, pears have fruit bases, apples have calyxes, and melons have blossom scars. The control unit 10 fits two ellipses to the outline of the fruit such that one of the different portions of the outline of the fruit is

closer to the feature portion of the fruit than the other of the different portions of the outline of the fruit. In the example illustrated in FIG. 13, two ellipses are fitted to the outline of the fruit such that one (first ellipse) of the two ellipses is closer to the feature portion of the fruit in the clipped image than the other (second ellipse) of the two ellipses. In step S53, the control unit 10 computes and outputs the centers, the long axes a, and the short axes b of the two ellipses. In step S54, the control unit 10 allocates images of the two ellipses (the first ellipse and the second ellipse) on the plane (imaging plane) parallel to the xy plane of the camera coordinate system. FIG. 14 is a diagram illustrating the camera coordinate system.

In step S55, the control unit 10 creates two cones that are circumscribed about the two ellipses. Specifically, the control unit 10 calculates a first cone that has the origin C (0,0,0) of the camera coordinate system as a vertex and is circumscribed about the first ellipse, and calculates a second cone that has the origin C (0,0,0) of the camera coordinate system as a vertex and is circumscribed about the second ellipse. In step S56, the control unit 10 specifies a predetermined position point A (x,y,z) of the fruit in the camera coordinate system based on the relative position between the camera 4 and the fruit. The control unit 10 may specify the predetermined position point A (x,y,z) of the fruit in the camera coordinate system based on an elevation angle $\beta$, an azimuth angle $\theta$, and the linear distance between the camera 4 and the fruit. The elevation angle $\beta$ and the azimuth angle $\theta$ can be obtained from the captured images. The linear distance between the camera 4 and the fruit is distance information indicating the distance between the fruit and the camera 4. The camera 4 may include a depth sensor, and the linear distance between the camera 4 and the fruit may be measured from depth information measured by the depth sensor. The camera 4 may include a distance measurement sensor, and the linear distance between the camera 4 and the fruit may be measured from distance information measured by the distance measurement sensor. The linear distance between the camera 4 and the fruit may be the shortest distance between the camera 4 and the fruit. In step S1 or step S55, the control unit 10 may acquire the linear distance between the camera 4 and the fruit.

In step S57, the control unit 10 calculates and creates a first sphere that passes through the predetermined position point A and is inscribed in the first cone. For example, the control unit 10 calculates the size (e.g., diameter d) and the position of the first sphere, and outputs the size and the position of the first sphere. In step S58, the control unit 10 calculates and creates a second sphere that has the diameter d and is inscribed in the second cone. For example, the control unit 10 calculates the size (diameter d) and the position of the second sphere, and outputs the size and the position of the second sphere. In this manner, the control unit 10 creates the two spheres (first sphere and second sphere) inscribed in the two cones (first cone and second cone), respectively, and computes the size and position of each of the two spheres. The first sphere and the second sphere have the same size and the same diameter d. In the above description, the cone corresponding to the sphere on the side where the feature portion is located, of the two cones, is the first cone, while not limited thereto.

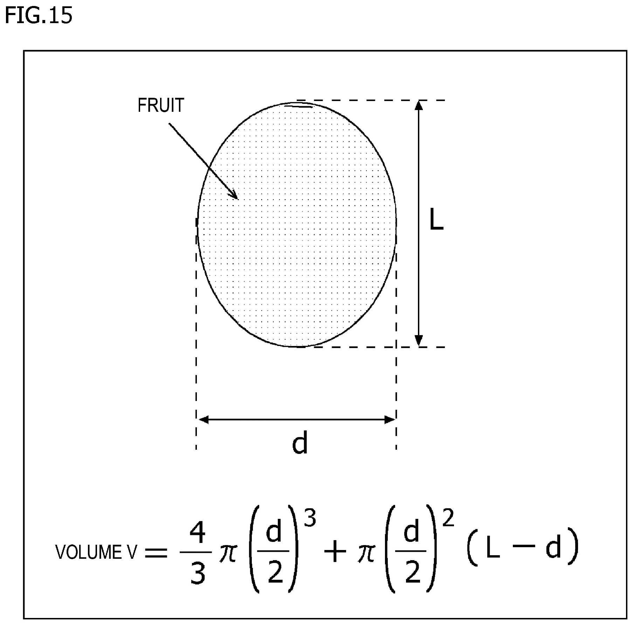

In step S59, the control unit 10 calculates a distance obtained by adding the radii of the two spheres to the center-to-center distance of the two spheres. Specifically, the control unit 10 calculates a distance L by adding the radius (d/2) of the first sphere and the radius (d/2) of the second sphere to the distance between the center of the first sphere and the center of the second sphere, and outputs the distance L. In step S60, the control unit 10 calculates the volume of the fruit based on the diameter d of the fruit (the diameter d of the first sphere or the second sphere) and the distance L, and outputs the volume of the fruit. As illustrated in FIG. 15, the volume V of the fruit is calculated based on the diameter d of the fruit and the distance L. FIG. 15 is a diagram illustrating an example of calculation of the volume V of the fruit. In this manner, the control unit 10 computes the sizes and the positions of the two spheres based on the distance information and the two spheres (the first sphere and the second sphere). For example, the control unit 10 computes, based on the distance information, the size and the position of the first sphere having an ellipse (first ellipse) as an image on the imaging plane, the ellipse being fitted such that one of the different portions of the outline of the fruit is closer to the feature portion of the fruit than the other of the different portions of the outline of the fruit. The control unit 10 computes the position of a second sphere having the other ellipse (second ellipse) of the two ellipses as an image on the imaging plane. Then, the control unit 10 estimates the three dimensional shape of the fruit so as to be along at least a part of the surface of each of the two spheres based on the sizes and the positions of the two spheres. The control unit 10 calculates and outputs the diameter d, the length (distance L), and the volume V of the fruit based on the three dimensional shape of the fruit. This makes it possible to measure the size of fruit with high accuracy.

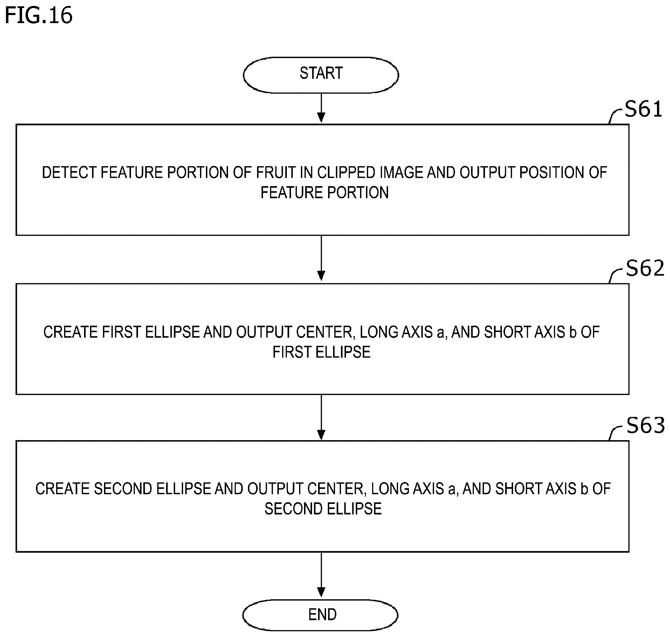

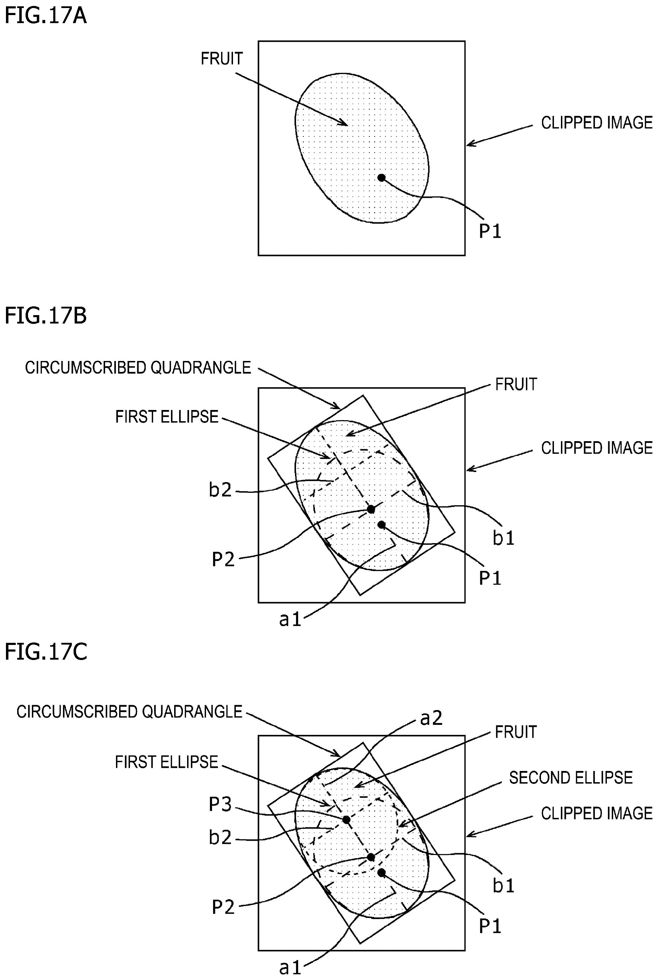

Details of the processing in steps S52 and S53 will be described. FIG. 16 is a flowchart illustrating an example of the processing in steps S52 and S53. FIGS. 17A, 17B, and 17C are explanatory diagrams for explaining the processing in steps S52 and S53. In step S61, to specify a first ellipse that fits the outline of the fruit in the clipped image, the control unit 10 detects the feature portion of the fruit in the clipped image and outputs the position of the feature portion. In the example illustrated in FIG. 17A, the feature portion of the fruit in the clipped image is indicated by a point P1. The feature portion may be learned by deep learning. The control unit 10 may detect the feature portion of the fruit in the clipped image using the trained model that has learned the feature portion. The control unit 10 may detect the feature portion by determining the color and luminance of the fruit.

In step S62, the control unit 10 creates an ellipse (first ellipse) having the short side of a circumscribed quadrangle as a short axis and fitted to the outline on the side close to the feature portion of the fruit, and computes and outputs the

center, the long axis a, and the short axis b of the first ellipse. In the example illustrated in FIG. 17B, the center of the first ellipse is indicated by a point P2, the long axis a of the first ellipse is indicated by an axis a1, and the short axis b of the first ellipse is indicated by an axis b1.

In step S63, the control unit 10 creates an ellipse (second ellipse) having a center on an extension line of a line connecting the feature portion of the fruit and the center of the first ellipse and fitted to a part of the outline on the side far from the feature portion of the fruit, and computes and outputs the center, the long axis a, and the short axis b of the second ellipse. In the example illustrated in FIG. 17C, the center of the second ellipse is indicated by a point P3, the long axis a of the second ellipse is indicated by an axis a2, and the short axis b of the second ellipse is indicated by an axis b2.

The measurement time in the case of measuring the size of a fruit based on a three dimensional image is about several times the measurement time in the case of measuring the size of the fruit based on a two dimensional image. In the present embodiment, the three dimensional shape of a fruit is estimated based on the two dimensional image of the fruit, and the size of the fruit is measured based on the three dimensional shape of the fruit, whereby the time required for measuring the size of the fruit can be shortened. Therefore, according to the present embodiment, it is possible to measure the sizes of fruits with high accuracy and to shorten the time required for the measurement of the sizes of fruits.

In the present embodiment, when a portion of a fruit in a two dimensional image is hidden, the outline of the hidden portion of the fruit is added to the two dimensional image, the three dimensional shape of the fruit is estimated based on the two dimensional image to which the outline of the hidden portion of the fruit is added, and the size of the fruit is measured based on the three dimensional shape of the fruit. Even when a portion of a fruit in a two dimensional image is hidden, the size of the fruit can be measured, and thus the accuracy of the measurement of all fruits and the measurement accuracy of the size of each fruit are improved.

In the field of logistics, an object such as a corrugated cardboard box is measured in a contact manner, whereas a non-contact manner is desirable in the field of agriculture because of a risk of damage caused by contact with fruits. Therefore, the weight of an object such as a corrugated cardboard box can be directly measured in the field of logistics, whereas the weight of fruits cannot be directly measured unless they are harvested. In the field of agriculture, there is a need to measure the weight of fruits before harvest. According to the present embodiment, it is possible to measure the sizes of fruits in a non-contact manner, and it is possible to measure the weights of fruits (yield prediction) before harvest.

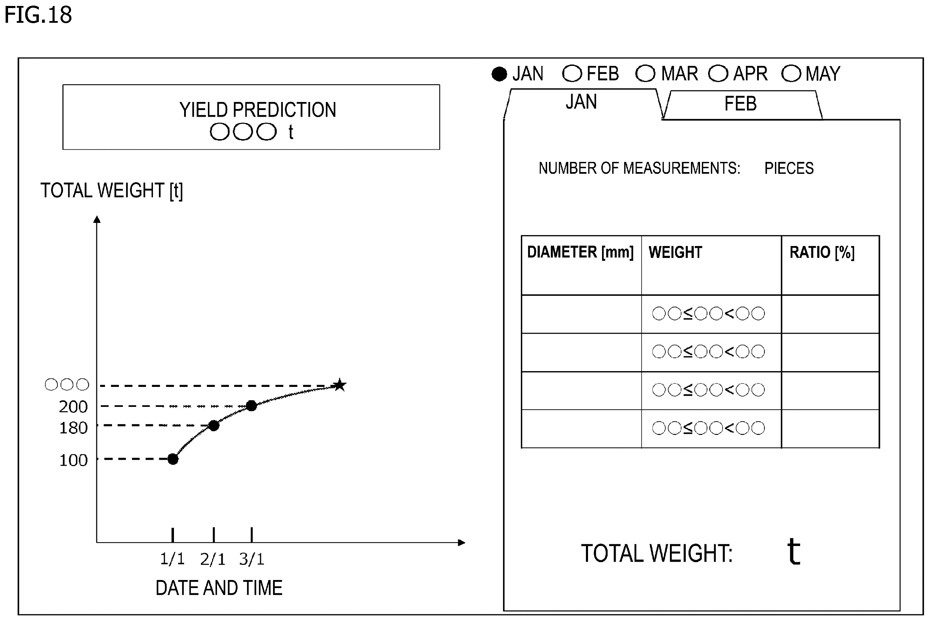

FIG. 18 is a diagram illustrating an example of the structure of data used for yield prediction. The calculation formula for calculating weights illustrated in FIG. 18 is a calculation formula for obtaining the weights of fruits from the diameters of the fruits, and is created by the user. For example, the calculation formula may be created using the knowledge of the user. The calculation formula may be stored in the storage unit 20. The user inputs the respective values for the number of measurements (pieces), the diameter (mm), and the ratio (%), and the total weight is calculated by the control unit 10. The total weight may be calculated on a daily basis or a monthly basis. By accumulating the total weight, the weight of the fruits (yield) before harvest is predicted and displayed in the field of yield prediction illustrated in FIG. 18. According to the present embodiment, since the sizes of fruits can be measured with high accuracy, the accuracy of the yield prediction can be improved. The data illustrated in FIG. 18 is sent from the external device 2 to the external device 3 and displayed on the display unit of the external device 3. The user can figure out the yield prediction by visually checking the content of the data displayed on the display unit of the external device 3.

<<Computer-Readable Recording Medium>>

A program for causing an information processing device or other machine or apparatus (hereinafter referred to as "computer or the like") to implement any of the above-described functions may be recorded on a computer-readable recording medium. The functions can be provided by causing the computer or the like to read and execute the program from the recording medium.

Here, the term "computer-readable recording medium" refers to a recording medium that stores information such as data or programs by electrical, magnetic, optical, mechanical, or chemical means, and that can be read by a computer or the like. Among such recording media, those which can be removed from the computer or the like include, for example, flexible disks, magneto-optical discs, CD-ROMs, CD-R/Ws, DVDs, Blu-ray discs, and flash memories. Examples of recording media fixed to the computer or the like include hard disks and ROMs.

<Supplementary Note 1>

An information processing device (2) including: an acquisition unit (110) configured to acquire a two dimensional image of a fruit of a plant captured by an imaging unit (4) configured to capture an image of the fruit, and distance information indicating a distance between the fruit and the imaging unit (4); an extraction unit (150) configured to extract an outline of the fruit in the two dimensional image; a computing unit (160) configured to fit two ellipses along different portions of the outline of the fruit, and compute sizes and positions of two spheres based on the distance information and the two ellipses; and an estimation unit (170) configured to estimate a three dimensional shape of the fruit so as to be along at least

a part of a surface of each of the two spheres based on the sizes and positions of the two spheres.

<Supplementary Note 2>

The information processing device (2) according to Supplementary Note 1, wherein

the extraction unit (150) is configured to extract a feature portion from the two dimensional image of the fruit, and
the computing unit (160) is configured to fit the two ellipses such that one of the different portions of the outline of the fruit is closer to the feature portion than another of the different portions of the outline of the fruit.

<Supplementary Note 3>

The information processing device (2) according to Supplementary Note 2, wherein the feature portion is a portion of the fruit opposite to a portion connected to a body of the plant in the two dimensional image, and is a portion visually different from another portion of the plant in the two dimensional image.

<Supplementary Note 4>

The information processing device (2) according to Supplementary Note 2 or 3, wherein the feature portion is a fruit apex, a fruit base, a calyx, or a blossom scar.

<Supplementary Note 5>

The information processing device (2) according to any one of Supplementary Notes 1 to 4, wherein

the extraction unit (150) is configured to extract a feature portion from the two dimensional image of the fruit, and
the computing unit (160) is configured to
with one of the two spheres being a first sphere and another of the two spheres being a second sphere,
compute, based on the distance information, a size and a position of the first sphere having an ellipse as an image on an imaging plane, the ellipse being fitted such that one of the different portions of the outline of the fruit is closer to the feature portion than the other of the different portions of the outline of the fruit, and
compute a position of the second sphere having another of the two ellipses as an image on the imaging plane, a size of the second sphere being identical to a size of the first sphere.

<Supplementary Note 6>

The information processing device according to Supplementary Note 5, wherein the computing unit (160) is configured to

calculate a first cone circumscribing one of the two ellipses,
calculate the first sphere inscribed in the first cone,
calculate a second cone circumscribing another of the two ellipses, and
calculate the second sphere inscribed in the second cone.

<Supplementary Note 7>

The information processing device (2) according to Supplementary Note 6, further including a calculation unit (180) configured to calculate a volume of the fruit based on a distance obtained by adding a radius of the first sphere and a radius of the second sphere to a distance between a center of the first sphere and a center of the second sphere, and on a diameter of the first sphere or a diameter of the second sphere.

<Supplementary Note 8>

The information processing device (2) according to any one of Supplementary Notes 1 to 7, further including an adding unit (140) configured to, when a portion of the fruit in the two dimensional image is hidden, add an outline of the hidden portion of the fruit to the two dimensional image.

<Supplementary Note 9>

An information processing method executed by a computer, the information processing method including:

acquiring a two dimensional image of a fruit of a plant captured by an imaging unit (4) configured to capture an image of the fruit, and distance information indicating a distance between the fruit and the imaging unit (4);
extracting an outline of the fruit in the two dimensional image;
fitting two ellipses along different portions of the outline of the fruit, and computing sizes and positions of two spheres based on the distance information and the two ellipses; and
estimating a three dimensional shape of the fruit so as to be along at least a part of a surface of each of the two spheres based on the sizes and positions of the two spheres.

<Supplementary Note 10>

A program for causing a computer to execute:

acquiring a two dimensional image of a fruit of a plant captured by an imaging unit (4) configured to capture an image of the fruit, and distance information indicating a distance between the fruit and the imaging unit (4);
extracting an outline of the fruit in the two dimensional image;
fitting two ellipses along different portions of the outline of the fruit, and computing sizes and positions of two spheres based on the distance information and the two ellipses; and
estimating a three dimensional shape of the fruit so as to be along at least a part of a surface of each of the two spheres based on the sizes and positions of the two spheres.

REFERENCE SIGNS

1: Autonomous traveling robot
2, 3: External device
4: Camera
5: Illumination device
6: Plant
10: Control unit
20: Storage unit
30: Communication unit
110: Acquisition unit
120: Detection unit
130: Judgment unit
140: Adding unit
150: Extraction unit
150: Computing unit
170: Estimation unit
180: Calculation unit
190: Output unit

**Claims**

**1.** An information processing device comprising:

an acquisition unit configured to acquire a two dimensional image of a fruit of a plant captured by an imaging unit configured to capture an image of the fruit, and distance information indicating a distance between the fruit and the imaging unit;
an extraction unit configured to extract an outline of the fruit in the two dimensional image;
a computing unit configured to fit two ellipses along different portions of the outline of the fruit, and compute sizes and positions of two spheres based on the distance information and the two ellipses; and
an estimation unit configured to estimate a three dimensional shape of the fruit so as to be along at least a part of a

surface of each of the two spheres based on the sizes and positions of the two spheres.

**2.** The information processing device according to claim 1, wherein

the extraction unit is configured to extract a feature portion from the two dimensional image of the fruit, and
the computing unit is configured to fit the two ellipses such that one of the different portions of the outline of the fruit is closer to the feature portion than another of the different portions of the outline of the fruit.

**3.** The information processing device according to claim 2, wherein the feature portion is a portion of the fruit opposite to a portion connected to a body of the plant in the two dimensional image, and is a portion visually different from another portion of the plant in the two dimensional image.

**4.** The information processing device according to claim 2, wherein the feature portion is a fruit apex, a fruit base, a calyx, or a blossom scar.

**5.** The information processing device according to claim 1, wherein

the extraction unit is configured to extract a feature portion from the two dimensional image of the fruit, and
the computing unit is configured to
with one of the two spheres being a first sphere and another of the two spheres being a second sphere, compute, based on the distance information, a size and a position of the first sphere having an ellipse as an image on an imaging plane, the ellipse being fitted such that one of the different portions of the outline of the fruit is closer to the feature portion than the other of the different portions of the outline of the fruit, and
compute a position of the second sphere having another of the two ellipses as an image on the imaging plane, a size of the second sphere being identical to a size of the first sphere.

**6.** The information processing device according to claim 5, wherein the computing unit is configured to

calculate a first cone circumscribing one of the two ellipses,
calculate the first sphere inscribed in the first cone,
calculate a second cone circumscribing another of the two ellipses, and
calculate the second sphere inscribed in the second cone.

**7.** The information processing device according to claim 6, further comprising a calculation unit configured to calculate a volume of the fruit based on a distance obtained by adding a radius of the first sphere and a radius of the second sphere to a distance between a center of the first sphere and a center of the second sphere, and on a diameter of the first sphere or a diameter of the second sphere.

**8.** The information processing device according to any one of claims 1 to 7, further comprising an adding unit configured to, when a portion of the fruit in the two dimensional image is hidden, add an outline of the hidden portion of the fruit to the two dimensional image.

**9.** An information processing method executed by a computer, the information processing method comprising:

acquiring a two dimensional image of a fruit of a plant captured by an imaging unit configured to capture an image of the fruit, and distance information indicating a distance between the fruit and the imaging unit;
extracting an outline of the fruit in the two dimensional image;
fitting two ellipses along different portions of the outline of the fruit, and computing sizes and positions of two spheres based on the distance information and the two ellipses; and
estimating a three dimensional shape of the fruit so as to be along at least a part of a surface of each of the two spheres based on the sizes and positions of the two spheres.

**10.** A program for causing a computer to execute:

acquiring a two dimensional image of a fruit of a plant captured by an imaging unit configured to capture an image of the fruit, and distance information indicating a distance between the fruit and the imaging unit;
extracting an outline of the fruit in the two dimensional image;
fitting two ellipses along different portions of the outline of the fruit, and computing sizes and positions of two

spheres based on the distance information and the two ellipses; and
estimating a three dimensional shape of the fruit so as to be along at least a part of a surface of each of the two spheres based on the sizes and positions of the two spheres.

6
1
4
5
2
3

FIG.1

FIG.2

EXTERNAL DEVICE
2
10
CONTROL UNIT
110
ACQUISITION UNIT
120
DETECTION UNIT
130
JUDGMENT UNIT
140
ADDING UNIT
150
EXTRACTION UNIT
160
COMPUTING UNIT
170
ESTIMATION UNIT
180
CALCULATION UNIT
190
OUTPUT UNIT
20
STORAGE UNIT
30
COMMUNICATION UNIT

FIG.3

START

S1 ACQUIRE TWO DIMENSIONAL IMAGE

S2 OUTPUT TWO DIMENSIONAL IMAGE TO WHICH CIRCUMSCRIBED QUADRANGLE IS ADDED

S3 IS ENTIRE PORTION OF FRUIT VISIBLE?

YES

NO

S5 OUTPUT CLIPPED IMAGE OF FRUIT (PARTIAL)

S6 ESTIMATE OUTLINE OF FRUIT

S7 OUTPUT CLIPPED IMAGE TO WHICH OUTLINE OF FRUIT IS ADDED

S4 OUTPUT CLIPPED IMAGE OF FRUIT (ENTIRE PORTION)

S8 ESTIMATE THREE DIMENSIONAL SHAPES OF FRUITS

S9 OUTPUT VOLUME OF FRUITS

END

FIG.4

FRUIT
CAPTURED IMAGE
CIRCUMSCRIBED QUADRANGLE
CIRCUMSCRIBED QUADRANGLE
FRUIT
FRUIT
CIRCUMSCRIBED QUADRANGLE

FIG.5

CIRCUMSCRIBED QUADRANGLE
CAPTURED IMAGE
FRUIT
CIRCUMSCRIBED QUADRANGLE
CIRCUMSCRIBED QUADRANGLE
FRUIT
FRUIT
CIRCUMSCRIBED QUADRANGLE
FRUIT

FIG.6
START
S11
SEARCH FOR OVERLAP BETWEEN CIRCUMSCRIBED QUADRANGLES
S12
COMPUTE IoU
S13
IoU> THRESHOLD ε
NO
YES
S17
MEASURE COLOR VALUES AND/OR LUMINANCE VALUES
S18
CALCULATE MODE OF COLOR VALUES AND/OR LUMINANCE VALUES IN EACH REGION
S14
AREA OF CIRCUMSCRIBED QUADRANGLE < THRESHOLD T1
NO
YES
S19
MODE < THRESHOLD T2
YES
NO
S16
OUTPUT CLIPPED IMAGE OF FRUIT (ENTIRE PORTION)
S15
OUTPUT CLIPPED IMAGE OF FRUIT (PARTIAL)
END

FIG.7

FIRST REGION
FRUIT
CIRCUMSCRIBED QUADRANGLE
SECOND REGION
FOURTH REGION
THIRD REGION

FIG.8

CAPTURED IMAGE
CIRCUMSCRIBED QUADRANGLE
LEAF
FRUIT
FRUIT

START
S21
SEARCH FOR OVERLAP BETWEEN CIRCUMSCRIBED QUADRANGLES
S22
COMPUTE IoU
S23
IoU> THRESHOLD ε
NO
YES
S27
OUTPUT OUTLINE OF FRUIT
S28
COMPUTE CIRCULARITY OF OUTLINE OF FRUIT
S24
AREA OF CIRCUMSCRIBED QUADRANGLE < THRESHOLD T1
NO
YES
S29
CIRCULARITY < THRESHOLD T3
YES
NO
S26
OUTPUT CLIPPED IMAGE OF FRUIT (ENTIRE PORTION)
S25
OUTPUT CLIPPED IMAGE OF FRUIT (PARTIAL)
END

FIG.9

FIG.10
START
S31
EXTRACT OUTLINE OF FRUIT
S32
MEASURE AREA WITHIN OUTLINE OF FRUIT
S33
AREA WITHIN OUTLINE OF FRUIT < THRESHOLD T4
NO
YES
S34
OUTPUT CLIPPED IMAGE OF FRUIT (PARTIAL)
S35
OUTPUT CLIPPED IMAGE OF FRUIT (ENTIRE PORTION)
END

FIG.11
START
S41
ACQUIRE CLIPPED IMAGE OF FRUIT (PARTIAL)
S42
MATCH CLIPPED IMAGE WITH CAPTURED IMAGES IN DATABASE
S43
EXTRACT OUTLINE FROM CAPTURED IMAGES IN DATABASE
S44
ESTIMATE OUTLINE OF HIDDEN PORTION OF FRUIT IN CLIPPED IMAGE OF FRUIT (PARTIAL)
S45
OUTPUT CLIPPED IMAGE TO WHICH OUTLINE OF FRUIT IS ADDED
END

FIG.12

START
S51
ACQUIRE CLIPPED IMAGE
S52
FIT TWO ELLIPSES TO OUTLINE OF FRUIT
S53
OUTPUT CENTERS, LONG AXES a, AND SHORT AXES b OF TWO ELLIPSES
S54
ARRANGE IMAGES OF TWO ELLIPSES ON IMAGING PLANE
S55
CREATE TWO CONES (FIRST CONE, SECOND CONE)
S56
SPECIFY PREDETERMINED POSITION POINT A OF FRUIT IN CAMERA COORDINATE SYSTEM
S57
CREATE FIRST SPHERE INSCRIBED IN FIRST CONE
S58
CREATE SECOND SPHERE INSCRIBED IN SECOND CONE
S59
OUTPUT DISTANCE L
S60
OUTPUT VOLUME OF FRUITS
END

FIG.13

FRUIT
CLIPPED IMAGE
y
FIRST ELLIPSE
FEATURE PORTION
SECOND ELLIPSE
x
IMAGING PLANE

FIG.14
CAMERA COORDINATE SYSTEM
FIRST CONE
SECOND CONE
SECOND SPHERE
FIRST SPHERE
A
θ
β
Z
y
X
C(0,0,0)
FIRST ELLIPSE
IMAGING PLANE
SECOND ELLIPSE
(* = FEATURE PORTION)

FIG.15

FRUIT
L
d
VOLUME V $= \frac{4}{3}\pi\left(\frac{d}{2}\right)^3 + \pi\left(\frac{d}{2}\right)^2 (L - d)$

FIG.16

START
S61
DETECT FEATURE PORTION OF FRUIT IN CLIPPED IMAGE AND OUTPUT POSITION OF FEATURE PORTION
S62
CREATE FIRST ELLIPSE AND OUTPUT CENTER, LONG AXIS a, AND SHORT AXIS b OF FIRST ELLIPSE
S63
CREATE SECOND ELLIPSE AND OUTPUT CENTER, LONG AXIS a, AND SHORT AXIS b OF SECOND ELLIPSE
END

FIG.17A

FRUIT
CLIPPED IMAGE
P1

FIG.17B

CIRCUMSCRIBED QUADRANGLE
FRUIT
FIRST ELLIPSE
CLIPPED IMAGE
b2
b1
P2
P1
a1

FIG.17C

CIRCUMSCRIBED QUADRANGLE
a2
FRUIT
FIRST ELLIPSE
SECOND ELLIPSE
P3
CLIPPED IMAGE
b2
b1
P2
P1
a1

FIG.18

YIELD PREDICTION
○○○ t
TOTAL WEIGHT [t]
○○○
200
180
100
1/1
2/1
3/1
DATE AND TIME
JAN
FEB
MAR
APR
MAY
JAN
FEB
NUMBER OF MEASUREMENTS: PIECES
DIAMETER [mm]
WEIGHT
RATIO [%]
○○≤○○<○○
○○≤○○<○○
○○≤○○<○○
○○≤○○<○○
TOTAL WEIGHT: t

## INTERNATIONAL SEARCH REPORT

International application No.
**PCT/JP2024/042563**

**A. CLASSIFICATION OF SUBJECT MATTER**

***A01G 7/00***(2006.01)i
FI: A01G7/00 603

According to International Patent Classification (IPC) or to both national classification and IPC

**B. FIELDS SEARCHED**

Minimum documentation searched (classification system followed by classification symbols)

A01G7/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

JSTPlus/JST7580 (JDreamIII); Science Direct

**C. DOCUMENTS CONSIDERED TO BE RELEVANT**

| Category* | Citation of document, with indication, where appropriate, of the relevant passages | Relevant to claim No. |
|---|---|---|
| A | JP 2015-43715 A (PANASONIC CORPORATION) 12 March 2015 (2015-03-12) entire text, all drawings | 1-10 |
| A | OMID, M., KHOJASTEHNAZHAND, M., TABATABAEEFAR, A., Estimating volume and mass of citrus fruits by image processing technique, Journal of Food Engineering, 21 April 2010, vol. 100, no. 2, pp. 315-321 entire text, all drawings | 1-10 |
| A | KOC, A. B., Determination of watermelon volume using ellipsoid approximation and image processing, Postharvest Biology and Technology, 25 April 2007, vol. 45, no. 3, pp. 366-371 entire text, all drawings | 1-10 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 February 2025** | **10 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/042563**

| Patent document cited in search report | Publication date (day/month/year) | Patent family member(s) | Publication date (day/month/year) |
|---|---|---|---|
| JP 2015-43715 A | 12 March 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022094331 A
- JP 2022144240 A